# EUROPÄISCHE PATENTSCHRIFT

(11) **EP 3 494 029 B1**
(45) Veröffentlichungstag und Bekanntmachung des Hinweises auf die Patenterteilung: **08.09.2021**
(21) Anmeldenummer: 17751243.1
(22) Anmeldetag: 18.07.2017
(51) Int. Cl.: B62D 25/00, B62D 29/00, B60R 13/08

(54) **HERSTELLVERFAHREN EINES AUS KUNSTSTOFF HERGESTELLTEN SCHALLDÄMPFUNGSBAUTEILS FÜR EIN KRAFTFAHRZEUG**
MANUFACTURING METHOD FOR A PLASTIC SOUNDPROOFING COMPONENT OF A MOTOR VEHICLE
PROCÉDÉ DE FABRICATION D'UN ÉLÉMENT STRUCTURAL INSONORISANT EN MATIÈRE PLASTIQUE POUR VÉHICULE

(30) Priorität: 04.08.2016 DE 102016009511
(43) Veröffentlichungstag der Anmeldung: 12.06.2019
(73) Patentinhaber: AUDI AG, 85045 Ingolstadt (DE)
(72) Erfinder: JÄSCHKE, Anja, 92339 Beilngries (DE); THURMEIER, Markus, 84166 Adlkofen (DE)
(86) Internationale Anmeldenummer: PCT/EP2017/000863
(87) Internationale Veröffentlichungsnummer: WO 2018/024361

(56) Entgegenhaltungen:
- WO-A1-01/58739
- WO-A1-2013/012972
- DE-A1- 2 800 914
- DE-A1- 10 110 908
- DE-A1-102012 006 824
- US-A- 4 573 707

## Beschreibung

Die Erfindung betrifft ein Verfahren zur Herstellung eines Schalldämpfungsbauteils aus Kunststoff, welches wenigstens einen Hohlraum aufweist, der zumindest teilweise mit einem Dämpfungsmaterial ausgefüllt ist.

Im Automobilbau werden zunehmend Bauteile aus Kunststoff oder auch faserverstärktem Kunststoff eingesetzt, um das Fahrzeuggewicht zu reduzieren.

Die DE 10 2009 017 738 A1 beschreibt eine Befestigungseinrichtung zum schwingfähigen Festlegen mindestens eines Aggregats eines Antriebs, insbesondere Motor und/oder Getriebe, an einer Karosserie und/oder einem Fahrwerk eines Kraftfahrzeugs. Die Befestigungseinrichtung besteht zumindest teilweise aus Kunststoff, insbesondere thermoplastischem Kunststoff, insbesondere aus faserverstärktem Polyamid. Das hat den Vorteil, dass die Akustik durch gezielte Nutzung der Materialdämpfung des Kunststoffs, der eine vergleichsweise hohe Materialdämpfung aufweist, beeinflusst werden kann.

Die DE 10 2013 217 460 A1 beschreibt einen Getriebequerträger in Kunststoffbauweise. Durch Art und Positionierung einer Endlosfaserverstärkung können Crash- oder Akustikfunktionen gezielt beeinflusst werden.

Die DE 10 2012 010 463 A1 beschreibt eine Rohbaustruktur für ein Kraftfahrzeug, mit wenigstens einem Strukturbauteil aus einem faserverstärkten Kunststoff, welches wenigstens einen Hohlraum umfasst, wobei der wenigstens eine Hohlraum zumindest teilweise mit einem Dämpfungsmaterial ausgefüllt ist. Das Dämpfungsmaterial ist bspw. ein poröser Schaumstoff. Durch das Vorsehen des Dämpfungsmaterials kann der üblicherweise relativ hohe Abstrahlgrad von Strukturbauteilen aus faserverstärktem Kunststoff erheblich verringert werden. Insbesondere wird die körperschallinduzierte Luftabstrahlung erheblich gedämpft, wodurch der hellhörige Charakter des Strukturbauteils bzw. der Rohbaustruktur und des gesamten Kraftfahrzeugs reduziert wird und wodurch ein verbesserter Geräuschkomfort gegeben ist.

Die DE 10110908 A offenbart ein Verfahren zur Herstellung eines Verbundteils im 2K- Spritzgießverfahren in einem Werkzeug mit mindestens einem ersten und einem zweiten Formnest, umfassend die Schritte:
a) Herstellen eines Trägerelements durch Einspritzen eines ersten Werkstoffs in das erste Formnest, wobei das Werkzeug geschlossen ist;
b) Herstellen einer Dekorschicht durch Einspritzen eines zweiten Werkstoffs in das zweite Formnest, in dem sich ein im vorherigen Arbeitsschritt gefertigtes Trägerelement befindet, wobei der zweite Werkstoff ein Treibmittel enthält und ein Thermoplast ist und wobei das Werkzeug geschlossen ist.

Die US 4 573 707 A offenbart ein Schalldämpfungsbauteil aus Kunststoff für ein Kraftfahrzeug, welches wenigstens einen Hohlraum aufweist, der zumindest teilweise mit einem aufgeschäumten Kunststoff als Dämpfungsmaterial ausgefüllt ist, wobei verschiedene Bereiche vorgesehen sind, in denen der Kunststoff unterschiedlich aufgeschäumt ist,

Die Aufgabe der Erfindung ist es, ein Verfahren zur Herstellung eines aus Kunststoff gebildeten und in seinen Akustikeigenschaften verbesserten Schalldämpfungsbauteils für ein Kraftfahrzeug anzugeben.

Diese Aufgabe wird gelöst durch ein erfindungsgemäßes Verfahren mit den Merkmalen des Patentanspruchs 1. Ausdrücklich ergeben sich Weiterbildungen und Ausgestaltungen der Erfindung analog für alle Erfindungsgegenstände aus den abhängigen Patentansprüchen, der nachfolgenden Beschreibung und den Figuren.

Das erfindungsgemäß hergestellte Schalldämpfungsbauteil weist wenigstens einen Hohlraum auf, der zumindest teilweise mit einem Dämpfungsmaterial ausgefüllt ist. Es kann sich sowohl um einen offenen als auch um einen geschlossenen Hohlraum handeln, der bspw. durch eine Außenhaut bzw. Außenwand des Bauteils begrenzt ist. Das erfindungsgemäße Schalldämpfungsbauteil ist dadurch gekennzeichnet, dass das Dämpfungsmaterial ein aufgeschäumter Kunststoff ist und dass am bzw. im Schalldämpfungsbauteil verschiedene Bereiche, d. h. Bauteilhohlbereiche, vorgesehen sind, in denen dieser Kunststoff unterschiedlich aufgeschäumt ist.

Die Verwendung eines aufgeschäumten Kunststoffs als Dämpfungsmaterial ermöglicht die einfache Herstellung des erfindungsgemäßen Schalldämpfungsbauteils, indem dieses bspw. in einem Spritzgießwerkzeug fertig hergestellt werden kann (One-Shot-Technologie), wie mit dem nebengeordneten Patentanspruch beansprucht.

Das erfindungsgemäß hergestellte Schalldämpfungsbauteil weist außerdem verschiedene Bereiche auf, in denen der als Dämpfungsmaterial dienende aufgeschäumte Kunststoff unterschiedlich aufgeschäumt ist, d. h. mit unterschiedlichen bzw. ungleichen Dichten und/oder Porositäten (Porengröße und -verteilung) ausgebildet ist. Damit gelingt eine hervorragende Anpassung an bauteil- und gegebenenfalls auch fahrzeugindividuelle Akustikprobleme. Eine konkrete Bauteilgestaltung mit derart unterschiedlich geschäumten Bereichen kann bspw. durch Simulation und/oder Versuche ermittelt werden.

Bevorzugt ist die Dichte des aufgeschäumten Kunststoffs durch das Aufschäumen um mindestens 10 % reduziert. D.h., der aufgeschäumte Kunststoff weist gegenüber dem selben ungeschäumten Kunststoff (Vollmaterial) eine um wenigstens 10 % reduzierte Dichte auf. Gleichwohl kann eine Dichtereduzierung von bis zu 50 % und mehr vorgesehen sein.

Der aufgeschäumte Kunststoff ist bevorzugt ein Thermoplast bzw. ein thermoplastischer Kunststoff. Der aufgeschäumte Kunststoff ist bspw. Polyamid, Polypropylen oder Polyurethan. Optional kann auch ein duroplastischer Kunststoff vorgesehen sein (z. B. aufgeschäumtes Epoxidharz), wobei es sich auch um einen UV-härtenden Kunststoff handeln kann. Bevorzugt ist ein sogenanntes Ein-Stoff-System, d. h. zur Herstellung des erfindungsgemäßen Bauteils wird nur ein Kunststoff verwendet, der dann sowohl ungeschäumt (d. h. als Vollmaterial) als auch unterschiedlich aufgeschäumt verarbeitet wird.

Der aufgeschäumte Kunststoff kann mit Verstärkungsfasern versetzt bzw. angereichert sein. Bevorzugt handelt es sich um Kurzglasfasern, wobei auch andere Faserarten möglich sind. Der Faservolumengehalt beträgt bspw. 10 % bis 15 %. Auch nicht geschäumte Bereiche, wie bspw. die Außenhaut oder Rippen (s. u.), können faser- und insbesondere kurzfaserverstärkt sein. Der Faservolumenanteil kann hier bis zu 60 % betragen. Insbesondere die Außenhaut kann auch mit Langfasern und/oder mit Fasereinlegern verstärkt sein. Außerdem kann der Kunststoff bzw. geschäumte Kunststoff auch mit anderen Füllstoffen angereichert sein, bspw. mit zerriebenen oder zermahlenen Fasern, gewichtsreduzierenden Hohlkügelchen, Altglas- bzw. Schaumglasgranulat (Blähglas) oder dergleichen.

Das erfindungsgemäß hergestellte Schalldämpfungsbauteil kann Übergangsbereiche bzw. -zonen umfassen (wenigstens einen), in denen der aufgeschäumte Kunststoff eine zunehmende oder abnehmende Dichte aufweist. Hierbei kann es sich um Auslaufzonen eines geschäumten Bereichs handeln.

Das erfindungsgemäß hergestellte Schalldämpfungsbauteil kann zumindest abschnittsweise eine doppelwandige Außenhaut und/oder wenigstens eine doppelwandige Rippe oder dergleichen aufweisen, in der sich aufgeschäumter Kunststoff befindet. Bevorzugt weist das Schalldämpfungsbauteil mehrere solcher Doppelwandhohlräume auf, in denen sich unterschiedlich aufgeschäumter Kunststoff befinden kann.

Das erfindungsgemäß hergestellte Schalldämpfungsbauteil kann eine aus Kunststoff gebildete Außenhaut und eine aus Kunststoff gebildete innere Verrippung (mit Innenrippen), durch die mehrere Hohlräume ausgebildet sind, aufweisen, wobei wenigstens zwei dieser Hohlräume (zumindest teilweise und insbesondere vollständig) mit unterschiedlich aufgeschäumten Kunststoff ausgefüllt sind. Ferner können auch Außenrippen vorgesehen sein. Sowohl die Außenhaut als auch die Rippen sind bevorzugt ungeschäumt ausgebildet (Vollmaterial), wobei insbesondere die Rippen dicker ausgebildet sein können als konstruktiv erforderlich, woraus sich Vorteile bei der einstückigen spritzgießenden Herstellung ergeben (s. u.). Die Außenwand und/oder die Rippen können auch doppelwandig und ausgeschäumt ausgebildet sein, wie oben beschrieben. Neben dem Ausschäumen von Hohlräumen ist auch ein Anschäumen oder Hinterschäumen von Bauteilbereichen möglich. Bevorzugt ist dieses Schalldämpfungsbauteil im Ein-Stoff-System (s. o.) hergestellt, d. h. es wurde bei der insbesondere spritzgießenden Herstellung nur ein Kunststoffmaterial, vorrangig ein Thermoplast, verwendet. Prinzipiell ist auch eine Herstellung aus mehreren unterschiedlichen Kunststoffen möglich.

Das erfindungsgemäß hergestellte Schalldämpfungsbauteil kann ein Karosseriesstrukturbauteil sein. D. h., die Erfindung bezieht sich auch auf ein Karosseriestrukturbauteil aus Kunststoff, das als Schalldämpfungsbauteil ausgebildet ist. Karosseriestrukturbauteile in diesem Sinne sind vor allem tragende Karosseriebauteile und/oder sicherheitsrelevante Karosseriebauteile und/oder für die Befestigung anderer Bauteile bzw. Komponenten vorgesehene Karosseriebauteile. Bevorzugt ist dieses Karosseriesstrukturbauteil hohlprofilähnlich ausgestaltet. Bspw. handelt es sich um eine Seitenschwellerverstärkung, eine Dachspriegelverstärkung, eine A-, B- oder C-Säulenverstärkung, eine Längsträgerverstärkung oder dergleichen.

Das erfindungsgemäß hergestellte Schalldämpfungsbauteil kann ein Getriebequerträger sein. D. h., die Erfindung bezieht sich auch auf einen Getriebequerträger aus Kunststoff, das als Schalldämpfungsbauteil ausgebildet ist. Aufgrund des unterschiedlich aufgeschäumten Kunststoffs werden deutlich bessere Akustikeigenschaften erreicht, als bei den aus der DE 10 2009 017 738 A1 und DE 10 2013 217 460 A1 vorbekannten Getriebequerträgern.

Das erfindungsgemäße Verfahren zur Herstellung eines Schalldämpfungsbauteils sieht die urformende Herstellung durch Spritzgießen vor, wobei die Herstellung in einem Arbeitsgang (und in einem Spritzgießwerkzeug) mittels einer 2-Komponeten-Spritzgießtechnik erfolgt (One-Shot-Technologie). Als erste Komponente wird ein insbesondere thermoplastischer Kunststoff ohne Treibmittel verwendet, mit dem bspw. eine Außenhaut bzw. Außenwand und/oder eine Verrippung bzw. Rippen erzeugt werden, und als zweite Komponente wird zur Ausschäumung der selbe Kunststoff mit Treibmittel verwendet, wobei der zweite mit Treibmittel versetzte Kunststoff nach dem Einspritzen chemisch und/oder physikalisch unterschiedlich aufgeschäumt wird. Das unterschiedliche Aufschäumen kann durch eine unterschiedliche Dosierung des Treibmittels, durch Verwendung verschiedener Treibmittel, durch lokal unterschiedliche Druck- und/oder Wärmeeinbringung, durch unterschiedliche UV-Härtung und/oder durch Gestaltung der auszuschäumenden Hohlräume bewerkstelligt werden. Den Komponenten kann ferner ein Faseranteil zugemischt werden, wie oben beschrieben.

Bevorzugt ist vorgesehen, dass das herzustellende Schalldämpfungsbauteil eine innere Verrippung bzw. Innenverrippung aufweist, wobei vorgesehen ist, dass die Rippen aus ungeschäumtem Kunststoff (Vollmaterial) gebildet werden, derart, dass dieser ungeschäumte Kunststoff durch das Aufschäumen des zu schäumenden Kunststoffs (zweite Komponente), also unter Ausnutzung eines Aufschäumdrucks, in die entsprechenden Kavitätsabschnitte gepresst wird. Dadurch kann der Kunststoffschaum auch besser expandieren. Ferner können die erforderlichen Drücke in der Druckgießmaschine reduziert werden. Dies kann begünstigt werden, indem die betreffenden Rippen dicker ausgebildet werden, als konstruktiv erforderlich.

Beim Spritzgießen können in an und für sich bekannter Weise sogenannte Inlays bzw. Inserts (bspw. Metall-, Kunststoff- oder Gummielemente) in das herzustellende Schalldämpfungsbauteil integriert werden.

Das erfindungsgemäß hergestellte Schalldämpfungsbauteil kann auch mittels Blasformen, Rotationsformen oder im RTM-Verfahren hergestellt werden. Das Schäumen des Kunststoffs bzw. Ausschäumen der betreffenden Bereiche kann gegebenenfalls in einem zweiten Arbeitsschritt erfolgen.

Die Erfindung wird nachfolgend mit Bezug auf die schematischen Figuren näher erläutert. Die in den Figuren gezeigten oder nachfolgend erläuterten Merkmale können, auch losgelöst von konkreten Merkmalskombinationen, allgemeine Merkmale der Erfindung sein und die Erfindung weiterbilden. Ferner können die Merkmale verschiedener Ausführungsbeispiele der Erfindung zu weiteren Ausführungsmöglichkeiten kombiniert werden.
- Fig. 1: zeigt ein Strukturbauteil in einer Schnittansicht.
- Fig. 2: zeigt einen Getriebequerträger in einer Schnittansicht.

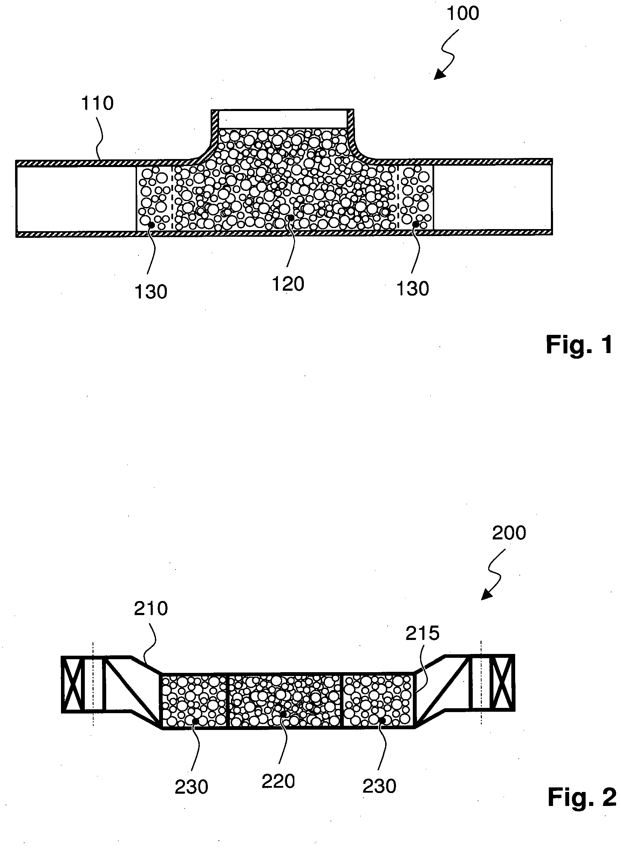

Fig. 1 zeigt eine Seitenschwellerverstärkung 100, die an der B-Säulen-Anbindung eingesetzt wird. Die Seitenschwellerverstärkung 100 ist hohlprofilähnlich ausgestaltet und weist einen Bereich 120 mit aufgeschäumtem Kunststoffmaterial auf, das der akustischen Dämpfung dient, aber auch festigkeitssteigernde bzw. stabilitätserhöhende Wirkung haben kann. Die massive bzw. ungeschäumte Außenhaut bzw. Außenwand 110 ist aus dem selben Kunststoffmaterial gebildet und kann außerdem faserverstärkt sein, bspw. durch sogenannte Einleger.

In Längsrichtung schließen sich an den Bereich 120 beidseitig Übergangsbereiche 130 an, in denen der selbe aufgeschäumte Kunststoff eine höhere und insbesondere nach außen hin zunehmende Dichte aufweist. Diese Übergangsbereiche 130 können auch als Auslaufzonen aufgefasst werden. Die Seitenschwellerverstärkung 100 weist also verschiedene Bereiche 120/130 auf, in denen der geschäumte Kunststoff unterschiedlich aufgeschäumt ist, wobei es sich jeweils um einen geschlossenzelligen Kunststoffschaum handelt, der auch kurzfaserverstärkt sein kann. In den aufgeschäumten Bereichen 120/130 ist die Dichte des Kunststoffmaterials um wenigstens 10 % reduziert.

Fig. 2 zeigt einen Getriebequerträger 200 für die Befestigung eines Getriebes oder dergleichen an der Karosserie und/oder dem Fahrwerk eines Kraftfahrzeugs. Der Getriebequerträger 200 weist eine aus Kunststoff gebildete Außenhaut 210 und eine aus dem selben Kunststoff gebildete innere Verrippung 215 auf. Die Außenhaut 210 und die Verrippung 215 sind aus ungeschäumten Kunststoffvollmaterial gebildet. Die Außenhaut 210 kann eine Faserverstärkung aufweisen, die bspw. durch Einleger oder auch aus Organoblech gebildet ist. Durch die vorzugsweise ohne Faserverstärkung ausgebildete Verrippung 215 sind mehrere Hohlräume 220/230 vorhanden, wobei wenigstens zwei dieser Hohlräume zwecks akustischer Dämpfung mit Kunststoffschaum desselben Kunststoffmaterials ausgefüllt sind und der Kunststoff unterschiedlich aufgeschäumt ist. Der Kunststoffschaum kann auch positiven Effekt auf die Stabilität bzw. Festigkeit und das Schwingverhalten des Getriebequerträgers 200 haben. Auch die Verrippung 215 kann etwaigen Akustik- und/oder Festigkeitsanforderungen entsprechend gestaltet sein.

Die beiden in den Figuren gezeigten Bauteile 100 und 200 haben aufgrund des enthaltenen aufgeschäumten Kunststoffs schalldämpfende Eigenschaften und können daher auch als Schalldämpfungsbauteile bezeichnet werden. Durch die Gestaltung der geschäumten Bereiche kann das akustische Verhalten und insbesondere die Eigenfrequenz eingestellt werden, um Resonanzen zu verhindern. Die Aufschäumung erfolgt vorzugsweise nur dort, wo dies auch unbedingt erforderlich ist (partielles Aufschäumen). Durch den Kunststoffschaum wird ein größerer Schwingungswiderstand des betreffenden Bereichs bzw. Bauteils erzielt, was zu einer besseren Dämpfung von Schwingungen führt, so dass bspw. akustische Emissionen deutlich verringert sind. Da weniger Geräusche in das Fahrzeug übertragen werden, können sekundäre Schalldämpfungsmaßnahmen, wie bspw. Dämpfungsmatten im Fahrzeugbodenbereich, entfallen, womit auch damit im Zusammenhang stehende Aufwände und Kosten wegfallen.

Die Herstellung der Bauteile 100 und 200 erfolgt insbesondere mit dem oben beschriebenen Herstellungsverfahren.

## Patentansprüche

1. Verfahren zur spritzgießenden Herstellung eines Schalldämpfungsbauteils (100, 200) aus Kunststoff für ein Kraftfahrzeug, welches wenigstens einen Hohlraum aufweist, der zumindest teilweise mit einem aufgeschäumten Kunststoff als Dämpfungsmaterial ausgefüllt ist, wobei verschiedene Bereiche (120,130; 220, 230) vorgesehen sind, in denen der Kunststoff unterschiedlich aufgeschäumt ist,
**dadurch gekennzeichnet, dass**
die Herstellung in einem Arbeitsgang mittels einer 2-Komponenten-Spritzgießtechnik erfolgt, wobei als erste Komponente ein Kunststoff ohne Treibmittel und als zweite Komponente derselbe Kunststoff mit Treibmittel verwendet wird, wobei der zweite Kunststoff nach dem Einspritzen chemisch und/oder physikalisch unterschiedlich aufgeschäumt wird.

2. Verfahren nach Anspruch 1,
**dadurch gekennzeichnet, dass**
die Dichte des aufgeschäumten Kunststoffs durch das Aufschäumen um mindestens 10 % reduziert wird.

3. Verfahren nach einem der vorausgehenden Ansprüche,
**dadurch gekennzeichnet, dass**
der aufgeschäumte Kunststoff mit Füllstoffen versetzt wird.

4. Verfahren nach einem der vorausgehenden Ansprüche,
**dadurch gekennzeichnet, dass**
das Schalldämpfungsbauteil ein Karosseriesstrukturbauteil (100) oder ein Getriebequerträger (200) ist.

## Claims

1. Method for the production by injection moulding of a sound damping component (100, 200) made of plastic for a motor vehicle, which has at least one cavity, which is filled at least partly with a foamed plastic as damping material, wherein different regions (120, 130; 220, 230) are provided in which the plastic is foamed differently,
**characterised in that**
the production is performed in one operation by means of a 2-component injection moulding technique, wherein a plastic without a blowing agent is used as the first component and the same plastic with blowing agent is used as the second component, wherein the second plastic is foamed chemically and/or physically differently after injection.

2. Method according to claim 1,
**characterised in that**
the density of the foamed plastic is reduced at least 10% by the foaming process.

3. Method according to any of the preceding claims,
**characterised in that**
the foamed plastic is mixed with fillers.

4. Method according to any of the preceding claims,
**characterised in that**
the sound damping component is a body structure component (100) or a transmission cross member (200).

## Revendications

1. Procédé de fabrication par moulage par injection d'un composant d'insonorisation (100, 200) en matière plastique pour un véhicule automobile, qui présente au moins un espace creux qui est rempli au moins partiellement avec une matière plastique expansée comme matériau d'amortissement, dans lequel différentes zones (120, 130 ; 220, 230) sont prévues, dans lesquelles la matière plastique est expansée différemment,
**caractérisé en ce que**
la fabrication est effectuée dans un cycle de travail au moyen d'une technique de moulage par injection à deux composants, dans lequel comme premier composant une matière plastique est utilisée sans agent gonflant et comme second composant la même matière plastique est utilisée avec un agent gonflant, dans lequel la seconde matière plastique est expansée après l'injection différemment de manière chimique et/ou physique.

2. Procédé selon la revendication 1,
**caractérisé en ce que**
l'épaisseur de la matière plastique expansée est réduite par le moussage d'au moins 10 %.

3. Procédé selon l'une quelconque des revendications précédentes,
**caractérisé en ce que**
la matière plastique expansée est chargée de matières de remplissage.

4. Procédé selon l'une quelconque des revendications précédentes,
**caractérisé en ce que**
le composant d'insonorisation est un composant structurel de carrosserie (100) ou une poutre transversale de transmission (200).
